# EUROPEAN PATENT APPLICATION

(11) **EP 4 794 158 A1**
(43) Date of publication of application: **19.08.2026**
(21) Application number: 25197792.2
(22) Date of filing: 25.08.2025
(51) Int. Cl.: H02J 3/38, H02J 3/46

(54) **FAULT RIDE THROUGH MANAGEMENT FOR HYBRID POWER PLANTS**

(71) Applicant: Siemens Gamesa Renewable Energy A/S, 7330 Brande (DK)
(72) Inventor: The designation of the inventor has not yet been filed
(74) Representative: SGRE-Association

(57) **Abstract**

The present invention relates to a method to control a renewable power plant (2) having a rated plant power being a maximal power generation of first power devices (3) and second power devices (4) of the renewable power plant (2), and where the power plant (2) is adapted to feed generated power to an electrical distribution grid (7) having a grid capacity, where the grid capacity is limited relative to the rated plant power, and wherein the control includes a for at least the first power devices (3) to be operated by basic FRT schedules at the detection of an event in the electrical distribution grid (7), and where the method includes to replace the basic FRT schedules with updated FRT schedules under given event conditions (deviation) where updated FRT schedules is updated within a maximum time distance to the detection of the event.

The present invention further relates to a controller operating the method, and a renewable power plant being controlled accordingly.

## Description

### BACKGROUND OF THE INVENTION

The present invention relates to a power system including a renewable power plant such as including a wind farm connected to an electrical grid (e.g. the public distribution utility grid), and methods to prevent for example wind turbines tripping due to deviation events in the grid.

The present invention may particularly be relevant in relation to systems where the renewable power plant has a rated plant power higher than the electrical distribution grid maximum power capacity, also referred to as the grid capacity. This may give a situation where the upstream system of the distribution grid is designed only for a limited capacity compared to full rated power capacity of the renewable power plant

Rated power is also frequently referred to a design power or nominal power, and is the relation given and certified by the manufacturer of for example the individual wind turbines, photovoltaic devices, electrolyzers etc. It gives the power production of the for-example wind turbine when it operates un-curtailed, thus is a maximal power production allowing operation for perhaps more than 20 years without disproportionate tear and wear of the components when the wind turbine is operated at normal operational settings. The rated plant power then is the collective or aggregated power production of all the power devices of the renewal power plant.

The present invention may further be particularly relevant in relation to systems where the renewable power plant has a collection of first power devices (renewable power generating devices) and one or multiple second power devices. The first power devices could be wind turbines and/or photovoltaic power generating devices. The second power devices could include hydrogen production devices (including electrolyzers etc), energy storages like batteries (BESS), synchronous condensers and/or possible photovoltaic power generating devices regarded as second power devices rather than first power devices.

Fault-ride-through (FRT) is a capability of a wind turbine to remain connected to the grid and continue operating within safe limits during e.g. grid events, also often referred to as grid events. When an event in the form of a fault occurs in the grid, such as a sudden drop in voltage or change in frequency, it can potentially disrupt the turbine operation.

In a successful FRT, in case of the detection of an event by a wind turbine, plant controller etc., it then temporarily adjusts its operating parameters to ride through the disturbance until the grid returns to normal conditions. The parameters are chosen to prevent the turbine from tripping allowing continued power production, though possible at a lower level.

An unsuccessful FRT may lead to unplanned turbine trip and an automatic safety shutdown. It may thus reduce revenue stream due to loss of power production, but also because also possible due to increased maintenance costs, just as it may lead to compensation claims to unplanned turbine downtimes. Moreover, grid compliance must be maintained at all the time, and one of the grid compliance requirements typically is turbines robustness to an event in the grid.

For some systems, such as where the electrical distribution grid maximum power capacity is limited or even smaller than the rated plant power, there is a possibility of too much fault current in case of a grid event. In other words, the electrical grid has a lack of grid capacity to absorb the power from the renewable power plant, at least if the renewable power plant operates close to rated plant power.

This situation may for example be a consequence of existing renewable power plants being upgraded with second power devices like energy storages like battery energy storage system (BESS), and/or photovoltage devices (PV) and /or hydrogen production devices like electrolyzers, or fuel cell, synchronous condenser etc. The upstream connected distribution grid capacity may not always be upgraded accordingly. It may be a more permanent situation, or it may be temporal due to maintenance, repair, partial breakdown etc. of parts of the electrical grid, connected loads, energy storages to absorb infeed power, all limiting the grid capacity. In such situations the grid capacity may be referred to as a temporal limited grid capacity.

For such electrical systems, or in such situations, it is standard for the renewable power plant to be operated under power constraints to prevent to exceed the limited grid capacity, e.g. indicated by a protection limit of the upstream network forming the electrical distribution grid. In cases where the power feed to the grid exceeds the grid capacity, it may cause a plant wide trip of wind turbines starting mostly to be operating in self-consumption, power import and limited power export modes.

In these situations, if there is no fault, current flow is controlled by a plant controller and therefore grid protection limits are respected, however, during faults, each capable converter injects fault current by itself in an independent manner in response to registered voltage on its terminals. By being 'capable' means it is in a state where the converter is capable of the injection according to its capacity, settings etc.

Fault event, or other deviation events, on e.g. the electrical distribution grid, activates FRT mode for the renewal power plant power devices due to too much current flowing from the renewable power plant to the upstream electrical distribution grid may make the power plant non-compliant to the renewable power plant FRT response in accordance with the grid code, and thus cause protection system of the grid to trip.

As previously indicated, this is a problem in general for power plants that have upstream distribution grid systems limited in terms of power export capability compared to rated plant power capacity, also known as overplanting. This kind of physical configuration of power plants can exist in wind power plants, solar power plants, hybrid power plants etc., therefore all configurations of converter-based power devices are susceptible to this problem if overplanted.

The problem may be further enhanced if the grid connection strength is low, and a synchronous condenser is added to the renewable power plant to help with grid strength. This is because synchronous condenser can inject (depending on fault retain voltage) for example 4-6 times its rated capacity as fault current, contributing significantly to rise in fault current from the renewable plant.

### SUMMARY OF THE INVENTION

The object of the invention is achieved by the independent claims. The dependent claims describe advantageous developments and modifications of the invention.

This includes introducing a method to control a renewable power plant having a rated plant power being a maximal power generation of first power devices and second power devices of the renewable power plant, and where the power plant is adapted to feed generated power to an electrical distribution grid having a grid capacity, where the grid capacity is limited relative to the rated plant power, and wherein at the detection of an event in the electrical distribution grid the control includes for at least the one of the first power devices to be operated according to a FRT schedule which under given event conditions is a reduced FRT schedule relative to a default FRT schedules, and where the reduced FRT schedule is related to the grid capacity and the available renewable power plant power production and is being updated at a time-schedule

The reduced FRT schedule may include a reduction in produced power relative to the available power production. For example, it may be reduced in case of later additions of first power devices and / or second power devices in relation to a first installation of the power plant.

The recalculation intervals of reduced FRT schedules according to the time-schedule may be
- related to a grid limitation change or change in available renewable power plant production, and / or be
- in the order of milli-seconds to seconds.

The defining, or control, of updated FRT schedules may run continuously according to the time-schedule prior and post to the event. Alternatively, is the defining of updated FRT schedules may initiated at the detection of an event.

The updating of FRT schedules may be done centralized by a plant controller. The respective plant controller then analyses the upstream electrical distribution system, and based on this input and information regarding capability, status and availability of the first and possible second power devices, calculate the updated FRT schedules.

The updating of FRT schedules may alternatively be done de-centralized by the first power device controllers of the individual first power devices. The first power device controllers then may receive information regarding grid safety limits, the availability and capability of at least a multiple of the first and second power devices and their settings and basic and updated FRT schedules. Further, the first power de-vice controllers then may take account on the input on status and limitations of the other first and second power devices creating first and second power device updated FRT schedules that combines into a plant updated FRT schedule that with updated injection limits within grid safety limits of the distribution grid.

One of the second power devices may be a special device adapted to absorb excess fault current.

In an embodiment, the second power devices easiest to control is set to take a higher responsibility of limiting current injection of the updated plant FRT schedule.

The updating of the first and second power device FRTT schedules may be done by an open loop control.

In an embodiment, first power device converters are set to saturate current injection earlier than nominal.

The selection of power devices to be main contributors of the power plant combined current injection limiting may be based on their availability and/or easiness of control.

The present invention further relates to a controller adapted to operate the method or a renewable plant according to any of the embodiments.

The present invention further relates to a renewable power plant including (or being) controlled by the method according to any of the previous embodiments. The plant could include a wind farm.

Advantageous configurations and embodiments of the method according to the invention follow from the claims dependent on claim 1.

### BRIEF DESCRIPTION OF THE DRAWINGS

Embodiments of the invention are now described, by way of example only, with reference to the accompanying drawings, of which:
Figure 1 shows a schematic and typical electrical supply and distribution system supplied by power produced by renewable power sources.
Figure 2 illustrates a threes phase voltage level with a grid fault event at time t.
Figures 3 shows a second embodiment flow chart of the method according to the present invention.
Figures 4-7 shows different control system arrangements of renewable power plants.
Figure 8 shows show an updated FRT schedule based with a reduced allowed reactive current production.

The illustration in the drawings is in schematic form. It is noted that in different figures, similar or identical elements may be provided with the same reference signs.

### DESCRIPTION OF THE DRAWINGS

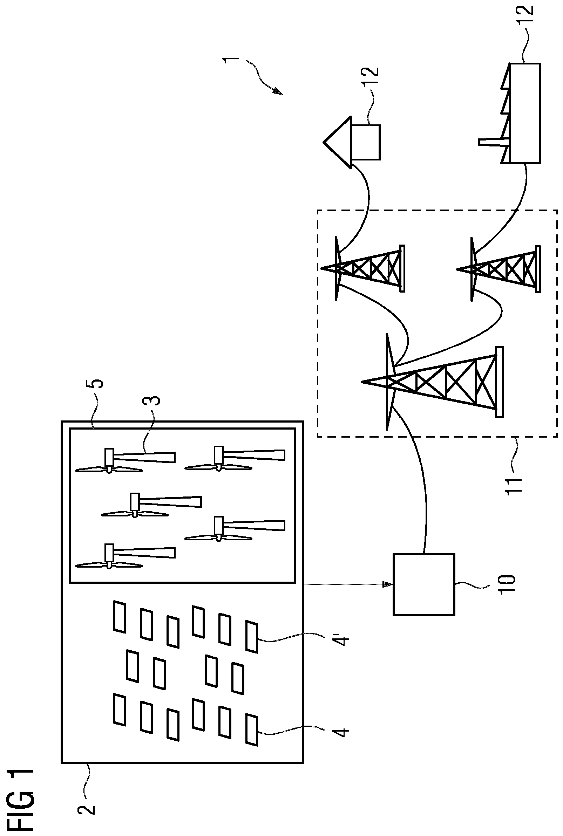

Figure 1 is a schematic illustration of an electrical supply and distribution system 1. The power is supplied a renewable power plant 2 comprising multiple power devices 3, 4. These includes first power devices 3 for example in the form of a collection of wind turbines 3. Such a collection is also referred to as a wind park or wind farm 5.

The individual wind turbines 3 each may be formed with a tower and a nacelle which comprises a hub and a rotor with blades to catch the wind. A generator is connected to the rotor to convert a rotation into electrical power.

The renewable power plant 2 as illustrated may further include or be connected to second power devices 4, which for example could include photovoltaic plants, hydrogen production devices (including electrolyzers etc), energy storages like batteries (BESS) etc. They could themselves include a photovoltage plant formed of a collection of individual photovoltage power generating devices. The second power devices 4 could include hydrogen production devices connected with individual wind turbines 3, for example each or some of the wind turbines 3 being connected to power one or more hydrogen production devices 4. Alternatively, the wind farm 5 itself is connected to power the hydrogen production devices. Energy storages like BESS may in the same manner be energy storages for the individual wind turbines 3 (e.g. some of them), and/or be connected to the wind farm 2 itself, or they may collections forming an energy storage plant. Second power devices 4, like hydrogen production devices and energy storages, thus may receive power inputs from the wind turbines 3, e.g. the wind farm 2, just as they may supply power to the distribution system 10 or to the wind turbines 3 when needed, such as for black starts etc.

The generated power is feed to distributions systems 10 that may include substations, transformers etc. From the distribution systems 10 the power is feed to the electrical distribution grid 11, or utility grid, to be provided as power for end users 12.

Typically, distribution grid 11 operates at a standardized nominal or rated frequency, which is the frequency of the oscillations of alternating current (AC) and is in large parts of the world 50 Hz or 60 Hz. In the same manner the distribution grid operates for example at a standardized nominal or rated voltage.

Of various reasons events may occur in for example the distribution grid 11 with deviations from the nominal values, for example a significant drop or increase of frequency or voltage. These are also referred to as grid events or grid faults.

Wind farms 3 feeding power to the distribution grids 11 usually needs to adapt to specified grid codes. One such grid code requirement often requires the wind turbines 3 to continue with a steady power production during grid events, also referred to as Fault-ride-through (FRT). Thus, rather than having wind turbines 3 of a wind farm 2 tripping during a grid event, they will remain connected to the grid 11, possible for a time-period specified in dependance to the event itself, such as the size or offset of a volage, frequency or current drop or increase relative to some nominal values, or the speed thereof.

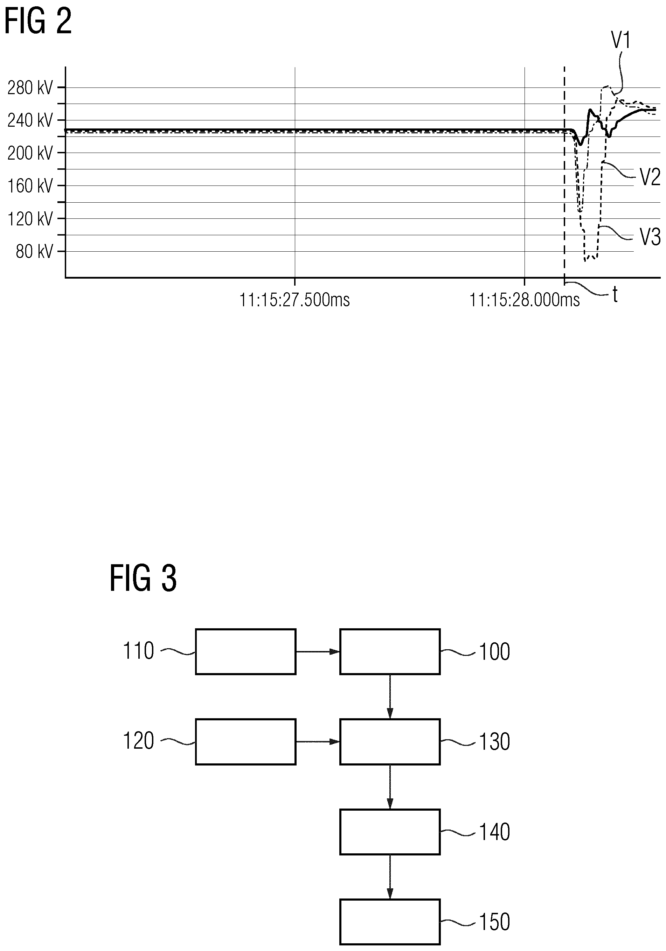

Figure 2 illustrates a three-phase grid voltage V1, V2, V3 with an event detected at the time t in the form of a sudden voltage drop. Prior to the event the voltage of all phases was stable, whereas after the time t a relatively abrupt voltage drop is observed causing disturbances in all phases. This may lead to tripping wind turbines 3.

The present invention in an embodiment introduces a method to control a renewable power plant 2 comprising multiple electricity generating power devices 3, 4 and being adapted to feed generated power to an electrical distribution grid 11. The renewable power plant 2 has a rated plant power, and the electrical distribution grid 11 has a grid maximum power capacity, in the following also simply referred to as grid capacity. As given previously, the grid capacity may be at least limited relative to the rated plant power, meaning the grid capacity may be smaller than the rated plant power.

Alternatively, it may be larger, but the difference being insufficient for required absorption during some events.

As also indicated previously, rated power is also frequently referred to a design power or nominal power, and is the relation given and certified by the manufacturer of for example the individual wind turbines 3 and second kind of power devices 4 like photovoltaic devices, electrolyzers etc. It for example gives the power production of a wind turbine 3 when it operates at a maximal given power production allowing operation for perhaps more than 20 years without disproportionate tear and wear of the components. The rated plant power then is the collective or aggregated power production of all the power devices of the renewal power plant 2.

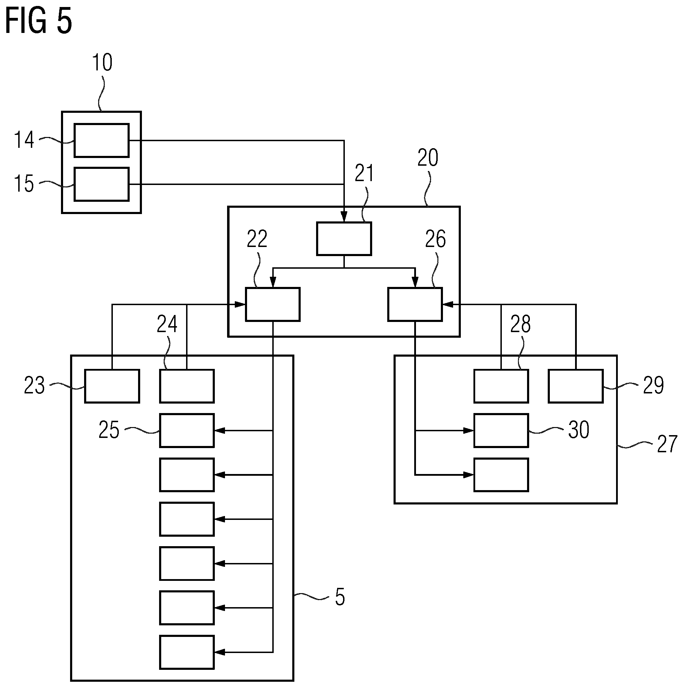

Preset basic FRT schedules are available at any time, also during normal operation of the renewable power plant 11 and the distribution grid 11. At the detection of an event, a controller (e.g. a first power device controller 25, e.g. a wind turbine controller, a second power device controller 26 like a BESS controller, see e.g. figure 5, 6 or 7), automatically will adapt its operation according to the basic FRT schedule including basic injection limits.

The method according to the invention as illustrated in fig-ure 3 includes a step 100 of dynamically receiving information 110 of a grid capacity and information 120 of the power devices 3, 4 of the power plant 2. The information is used to provide updated Fault-Ride-Through (FRT) schedules for all, or at least some, of the power devices 3, 4.

The updated FRT schedules include updated injection limits of current feeds for the FRT mode. The update is done at some defined time-schedule, which may be by some regular or irregular time intervals, e.g. in the order of milliseconds or less, of seconds, minutes or hours. The intervals may depend on the specific system requirements. Irregular time-schedules may be defined according to a present status of the present renewal plant power production, the status of the distribution grid 11, wind and solar conditions, etc.

In general, the requirement of the time-schedule is to ensure sufficiently updated FRT schedules to ensure sufficiently updated injection limits in relation to the status of the distribution grid 11 during the event. This may happen on quite quick time schedules, as seen in figure 2, such as in the order of milliseconds, and may include some significant dynamics like the shown voltage changes.

To this purpose, it has been found suitable updating the schedules with the new calculated limits and being redistributed within the first few cycles of the AC current after the detection of the event, such as within the first 10 cycles, or 5 cycles, or 3 cycles or less. This will ensure a fast response reducing the change for wind turbines 3 or relays from tripping.

FRT schedules for the first power devices 3 (like wind turbines) are in the following referred to as first power device FRT schedules, and for the second power devices 4 as second power device FRT schedules. The injections correspondingly referred to as first injection limits and second injection limits.

Power plant limitation data includes a plant FRT schedule that includes injection limitations of the renewable power plant 2 to the distribution grid, where the limitations are set to prevent feeding power to the distribution grid 11 above its grid capacity.

Step 130 is a detection of an event in the distribution grid 11 leading at least for affected first power devices 3, in the following exemplified as wind turbines 3, to enter 140 first basic FRT control modes, running according to the basic FRT schedules including basic injection limits.

In the embodiment of figure 3 the updating of the FRT schedule at some defined time-schedule is being done prior and post the detection of the event, even during normal operation of the renewable power plant 2.

At the at the detection 130 of an event, such as in the distribution grid 11, the first power devices 3 and optionally the second power devices 4 to enters 140 a FRT control mode shifting to basic FRT schedules with basic injection limits.

At the detection of a given event condition 150 the FRT mode changes from using the basic FRT schedules to the updated FRT schedules including updated injection limits. The event detection could be a particular high (or low) current, voltage and/or frequency deviation in the distribution grid 11, or an internal grid in the renewable power plant 2 or one of the first devices 3 or second devices 4. The change could be defined by e.g. a deviation of the current, voltage and/or frequency deviation passing some safety threshold. When within the threshold the chance for tripping relays may be small, but significant when outside.

If the time-schedules for updating the FRT schedules are within maximum time distances to the event, such as by previously indicated, they will adapt the more recent conditions, thus limiting the chance of tripping relays.

The advantage is the needed and updated FRT schedules will be available when needed allowing for a fast reaction and introduction of the FRT control current limitations to counter for the grid capacity limitations in relation to the rated plant power.

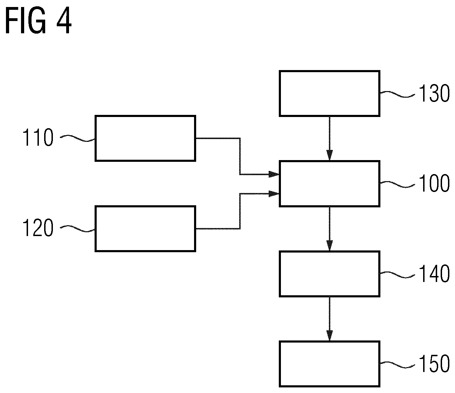

Figure 4 shows a related embodiment, but with the difference the step 100 to provide updated FRT schedules for at least some of the power devices 3, 4 is event-triggered, and only starts at the detection of an event. An advantage is the FTR schedule only needs to be updated when there is a risk of for example tripping relays. For many events in the distribution grid 11 the risk is small, the renewable power plant 2 and basic FRT schedules running well within a safety limit according to the grid capacity. Therefore, the forming of updated FRT schedules is not activated during normal operation, but only at the detection 130 of an event.

In either embodiment the time-schedule may be such that an updated FRT schedule will be available within the reaction time of a FRT mode to be initiated to counter an event creating tripping devices, 3, 4 or relays e.g. the PPC relay 14 as seen in figures 5-7.

Figure 5 illustrates an example of a traditional control setup for renewable power plants 2. In the illustration a substation 10 is seen at the point of common Coupling (PCC) to the distribution grid 11, which substation includes e.g. a PCC relay 14 and PCC meter 15. In case of a grid event the FRT control aims to prevent the PCT relay 14 from tripping. Information regarding for example the present status of the distribution grid 11, such as the occurrence of a grid event, may be provided by the PCC meter to for example the plant controller 20.

The illustrated plant controller 20 includes a plant secondary controller 21 controlling respectively a wind group controller 22 and a battery energy storage system (BESS) controller 26.

The wind group controller 22 controls the wind park 5 which includes devices like first power device controllers 25, e.g. wind turbine controllers 25 controlling the individual wind turbines 3, their converters etc. This includes the wind group controller 22 feeding instructions like wind turbine 3 settings and FRT control settings to the first power device controllers 25, which in turn may feed data like status of e.g. the respective wind turbine 3 back to the wind group controller 22.

The wind group controller 22 may further receive status data from a wind farm PoC meter 24 and a wind farm point of coupling (PoC) relay 23. In the same manner as the PPC relay 14, the FTR control may aim to prevent the coupling (PoC) relay 23 from tripping.

The BESS controller 26 controls a BESS plant 27 which includes devices like BESS inverters 30. The BESS controller 26 provides instructions like BESS and FRT control settings to the BESS inverters 30 of the individual energy storages like batteries, which in turn may feed data like BESS status back to the BESS controller 26.

The BESS controller 26 may further receive status data from a BESS PoC meter 28 and a BESS PoC relay 29. In the same manner as the PPC relay 14, the FTR control may aim to prevent the BESS PoC relay 29 from tripping.

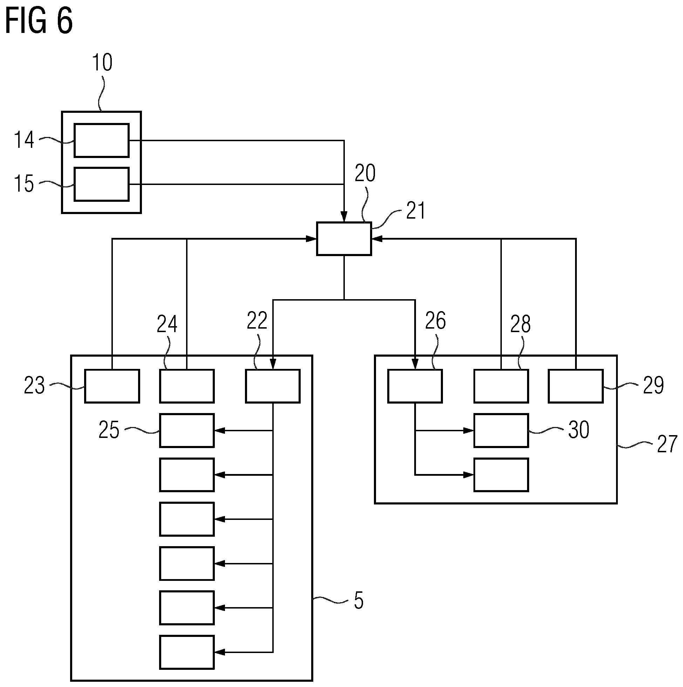

Figure 6 shows a control setup comprising many of the same devices as figure 5, with the main difference the respective wind group controller 22 and BESS controller 26 is moved out of the plant controller 20 into the respective wind park 5 and BESS plant 27, the plant controller 20 this acting as the plant secondary controller 21.

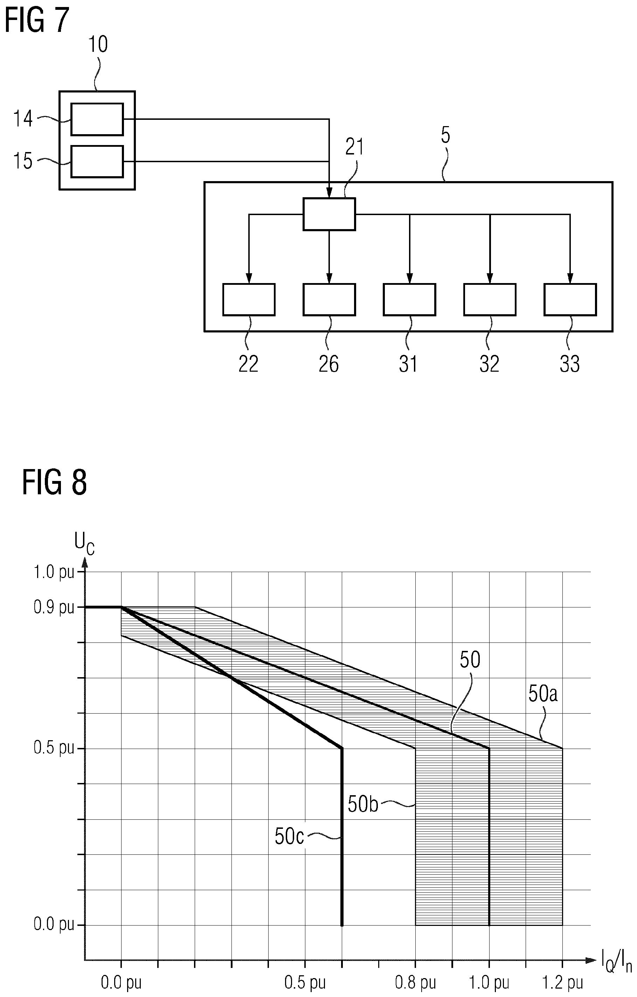

Figure 7 shows a control setup where the secondary plant secondary controller 21 replaces and acts as plant controller 20 and BESS controller 26. In this setup included in the wind farm 5 is also devices like wind group controller 22, BESS controller 26, and possible also a photovoltaic (PV) group controller 31, electrolyzer group controller 32 and/or synchronous condenser controller 33. In this embodiment y devices like photovoltaic (PV) devices, electrolyzers and/or synchronous condensers each are controlled by the respective controller 31, 32, 33.

In any of the embodiments, any of the second power devices could form part of the wind farm 5 or could be positioned in their own groups, thus combining embodiments of figures 5-7.

In one embodiment, plant controllers like the plant controller 20 or the plant secondary controller 21 operates in a centralized control and is responsible for the updating of the first power device updated FRT schedules, and possible second power device updated FRT schedules. In this embodiment the respective plant controller 20, 21 analyses the upstream electrical distribution system 11, and based on this input and information regarding capability, status and availability of the first 3 and possible second 4 power devices, calculate the updated FTT schedules. These are then distributed to the individual controllers like first power device controllers 25 and second power device controllers 26, 31, 32, 33.

In a de-centralized embodiment, the first power device controllers 25 of the individual first power devices 3 receives information regarding the power plant limitation data, and the availability and capability of at least a multiple of the first and second power devices 3, 4. The power plant limitation data includes the plant FRT schedule comprising the plant injection limitations of the renewable power plant 2 to the distribution grid. The maximum amount of power it is allowed to supply.

In this embodiment each first power device controller 25 controls a respective first power device 3 according to an individual first power device FRT schedule (basic or updated FRT schedules). The individual first power device FRT schedules associated with the individual first power device controllers 25 and respectively first power devices 3, then are calculated by the respective first power device controller 25 based on the received information regarding the power plant limitation data, and the availability and capability of at least a multiple of the first and second power devices 3, 4 of the renewable power plant 2.

In the same manner there may be some second power device 4 FRT schedules setting some injection limits.

The first power device controllers 25 thus takes account on the input on status and limitations of the other first 3 and second 4 power devices creating first and second power device updated FRT schedules that combines, or aggregates, into a plant updated FRT schedule that with updated injection limits within grid safety limits of the distribution grid 11. The grid safety limits are based on information of distribution grid 11 present parameters (voltage, current, frequency, power, etc.), and is set to prevent trips.

This way, each of the first power device controllers 25 acts as a leader or supervisor and may for the entire renewable power plant 2 estimate its own contribution part updated first power device updated FRT schedule current injection limits. The updated plant FRT schedule injection limits are then observed by for example feedback from other first power device controllers 25 and possible second power device controllers 26.

This may be done through a digital twin of the renewable power plant 2, each first 25 and possible second 26 power de-vice controllers during the calculation sends updating requests to the digital twin which returns allowed updated feedback for renewed calculations.

It may also be based on an algorithm or loop-up table, identifying updated first power device updated plant FRT injection limitation data, and the availability and capability of at least a multiple of the first 3 and second 4 power devices.

In even a further embodiment it is based on continuous updated inputs regarding e.g. the availability and capability of at least a multiple of the first 3 and second 4 power devices, and then by calculations and algorithms for each of the individual first 25 and possible second 26 power device controllers, e.g. via feedback control methods, to obtain the first and possible second updated FRT schedules. The updates may also be based onopen loop fashion control.

In an embodiment relevant to either the centralized or de-centralized solutions above, the active and reactive currents are coordinated in a way that all connected and capable first 3 and second 4 power devices provide updated FRT schedule current injections limitations dynamically if an event is detected. For example, if the plant controller 20 detects a voltage drop, where the contributed, or associated, total fault current exceeds some protection limits or thresholds (e.g. the protection system limits the one of the relays 14, 23, 29, or the the grid safety limits preventing trips), then the plant controller 20 recalculates and redistributes new and updated FRT schedule injection limits within the first few cycles of AC current, thereby updating in an open loop fashion. The converters of for example the first power device 3 wind turbines in general being set to saturate at nominal values, then are set to saturate current injection earlier than nominal.

The fault current of an event for either of the above embodiments can be both of positive and negative sequence. The plant controller 20 thus may provide varying positive and negative sequence current injection responsibility to different assets, like first 3 and second 4 power devices, thereby reducing the overall positive sequence current magnitude.

For either embodiment, terms 'capable' or 'available' refers to power devices 3, 4 not able to follow possible maximum settings under updated first or second power device FRT schedules etc., this not being capable of participating in the FRT control, or only to some extent.

In an embodiment, the devices easiest to control, such as second power devices 4 like BESS, is set to take a higher responsibility of limiting current injection of the updated plant FRT schedule, than for example first power devices 3 like wind turbines 3. This is easier to due to control or stability complexity.

One of the second power devices (4') may be a special device adapted to absorb excess fault current. This would make control of for example first power device 3 like wind turbines easier to control during the event, for example at high winds. Less reduction of the first power device 3 (and possible the other second power devices 4) operation may thus be implemented. Their operation may be reduced less than otherwise, at least part of the power generated above the different safety limits being diverted to the special second power devices (4'). The special power device (4') may an electrolyzer adapted to consuming fault current, or surplus power, to stay connected and generate for example Hydrogen. The special power device (4') may also be a shunt connected thyristor bridge configured as a fault limiting device.

As indicated previously and relevant to any of the embodiments, the updates may be done at some defined time-schedule, which may be by some regular time intervals, e.g. in the order of milli-seconds, second, minutes or hours, or it may be irregular defined according to a present status of the present renewal plant power production, the status of the distribution grid 11, wind and solar conditions, etc. They may be within the first few cycles of the AC current after the detection of the event, such as within the first 10 cycles, or 5 cycles, or 3 cycles or less.

If an event occurs within that period, then recently updated protection limits in the updated FRT schedules are already considered increasing the chance for a successful fault-ride-through.

Figure 8 illustrates an embodiment of the present invention showing respectively at the Y-axis a factor nominal voltage Uc seen in values of per unit (for example per wind turbine 3). The X-axis shows a factor reactive / active current I per unit. The line 50 illustrates a basic FRT schedule including a requirement reactive current (Ir) as a function of nominal current (In) vs voltage level (Uc) of a fault. It allowed range is indicated by lines 50a and 50b. The line 50c then shows an updated FRT schedule based with a reduced allowed reactive current production,

For either of the embodiments, a selection of power devices 3, 4 updating FTR schedules may be based on their availability and/or easiness of control. For example, no changes may be introduced to first power device 3 wind turbines stopped at the detection of the event. For wind turbines 3 running curtailed at the detection of the event, they may continue either with unchanged settings, not receiving any FRT updated schedules, or with smaller adaptations than wind turbines 3 running at rated power production.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

It should be noted that the use of "a" or "an" throughout this application does not exclude a plurality, and "comprising" does not exclude other steps or elements. Also, elements described in association with different embodiments may be combined. It should also be noted that reference signs in the claims should not be construed as limiting the scope of the claims.

## Claims

1. A method to control a renewable power plant (2) having a rated plant power being a maximal power generation of first power devices (3) and second power devices (4) of the renewable power plant (2), and where the power plant (2) is adapted to feed generated power to an electrical distribution grid (7) having a grid capacity, where the grid capacity is limited relative to the rated plant pow-er, and wherein at the detection of an event in the electrical distribution grid (7) the control includes for at least the one of the first power devices (3) to be operated according to a FRT schedule which under given event conditions is a reduced FRT schedule relative to a default FRT schedules, and where the reduced FRT schedule is related to the grid capacity and the available renewable power plant (2) power production and is being updated at a time-schedule or grid capacity or available renewable pow-er plant power production changes (event based).

2. Method according to claim 1, wherein the reduced FRT schedule includes a reduction in produced power relative to the available power production.

3. Method according to claim 1 or 2, wherein the recalculation intervals of reduced FRT schedules according to the timeschedule is
- related to an acceleration or speed of the event, related to triggered by a grid limitation change or change in available renewable power plant production, and/or
- in the order of milli-seconds to seconds., and/or
- is within the first few cycles of the AC current after the detection of the event, such as within the first 10 cycles, or 5 cycles, or 3 cycles or less.

4. Method according to claim 1, 2 or 3, wherein the re-calculation of the reduced FRT schedule runs continuously independent to the event.

5. Method according to any of the preceding claims 1, 2, 3 or 4, wherein the defining of the reduced FRT schedules is initiated at the detection of an event.

6. Method according to any of the preceding claims, where-in the re-calculation of the reduced FRT schedules is done centralized by a plant controller (20, 21).

7. Method according to claim 6, wherein the respective plant controller (20, 21) analyses the upstream electrical distribution system (11), and based on this input and in-formation regarding capability, status and availability of the first (3) and possible second (4) power devices, re-calculate the reduced FRT schedules.

8. Method according to any of the previous claims 1-5, wherein the re-calculation of the reduced FRT schedules is done de-centralized by the first power device controllers (25) of the individual first power devices (3).

9. Method according to claim 8, wherein the first power de-vice controllers (25) receive information regarding grid safety limits, the availability and capability of at least a multiple of the first (3) and second (4) power devices and their settings and basic and the reduced FRT sched-ules.

10. Method according to claim 9, wherein the first power de-vice controllers (25) take account on the input on status and limitations of the other first (3) and second (4) power devices calculating first and second power device reduced FRT schedules that combines into a plant reduced FRT schedule with updated injection limits being within the distribution grid (11) grid safety limits.

11. Method according to any of the previous claims, where-in one of the second power devices (4') is a special de-vice adapted to absorb excess fault current.

12. Method according to any of the previous claims, where-in the second power devices (4) being easiest to control is set to take a higher responsibility of limiting current injection of the reduced plant FRT schedule.

13. Method according to any of the previous claims, wherein first power device (3) converters are set to saturate current injection earlier than nominal.

14. Method according to any of the previous claim, wherein a selection of power devices (3, 4) to be the main contributors of the power plant (2) combined current injection limiting is based on availability and/or easiness of control.

15. A controller (20, 21, 25, 26) adapted to operate the method or a renewable plant (2) including a wind farm (2) controlled by the method according to any of the previous claims.
